# EUROPÄISCHE PATENTANMELDUNG

(11) **EP 1 961 645 A2**
(43) Veröffentlichungstag der Anmeldung: **27.08.2008**
(21) Anmeldenummer: 08150957.2
(22) Anmeldetag: 01.02.2008
(51) Int. Cl.: B62D 6/00, B62D 7/15, B62D 113/00, B62D 137/00

(54) **Verfahren zur Ansteuerung mehrerer Lenkaktuatoren eines zweiachsigen zweispurigen nicht spurgebundenen Fahrzeugs**

(30) Priorität: 24.02.2007 DE 102007009112
(71) Anmelder: Bayerische Motoren Werke Aktiengesellschaft, 80809 München (DE)
(72) Erfinder: Knobel, Christian, 80804, München (DE)

(57) **Zusammenfassung**

Die Erfindung betrifft ein Verfahren zur Ansteuerung von der Vorderachse und der Hinterachse eines zweiachsigen zweispurigen nicht spurgebundenen Fahrzeugs zugeordneten Lenk-Aktuatoren, die die lenkbaren Räder der jeweiligen Achse lenken, d.h. um deren Lenkachse verschwenken, wobei eine Soll-Trajektorie des Fahrzeugs berücksichtigt wird. Erfindungsgemäß wird bei ausreichend stabilem Fahrzustand des Fahrzeugs eine Lenkvorgabe des Fahrers von einer elektronischen Steuereinheit derart auf die Lenk-Aktuatoren der Vorderachse und der Hinterachse aufgeteilt, dass sich im wesentlichen eine der Soll-Trajektorie des Fahrzeugs entsprechende Gierrate einstellt und dass ein hiervon abweichender Anteil der Lenkvorgabe des Fahrers als Wunsch nach Querversatz interpretiert und folglich im wesentlichen in einem Schwimmwinkel des Fahrzeugs umgesetzt wird. Dabei kann die Soll-Trajektorie des Fahrzeugs aus dem ermittelbaren Verlauf der Fahrbahn abgeleitet werden, während ein Querversatz-Wunsch mittels geeigneter Sensoren erkannt werden kann.

## Beschreibung

Die Erfindung betrifft ein Verfahren zur Ansteuerung von der Vorderachse und der Hinterachse eines zweiachsigen zweispurigen nicht spurgebundenen Fahrzeugs zugeordneten Lenk-Aktuatoren, die die lenkbaren Räder der jeweiligen Achse lenken, d.h. um deren Lenkachse verschwenken, wobei eine Soll-Trajektorie des Fahrzeugs berücksichtigt wird. Eine Soll-Trajektorie beschreibt die Soll-Bewegungsbahn des Fahrzeugs vollständig, und zwar durch die Fahr-Geschwindigkeit, die Soll-Gierrate und den Soll-Schwimmwinkel des Fahrzeugs, wobei diese Größen - wie später erläutert wird - aus vorliegenden Randbedingungen unter Zugrundelegung eines geeigneten Modells (bspw. des dem Fachmann bekannten "Einspurmodells") rechnerisch abgeleitet werden können. Zum technischen Umfeld wird lediglich beispielshalber auf die DE 199 64 032 A1 verwiesen.

Üblicherweise werden zweiachsige, zweispurige, nicht spurgebundene Fahrzeuge alleine über lenkbare Vorderräder gelenkt, d.h. hinsichtlich der zu befahrenden Spur gesteuert. Bekannt sind ferner Fahrzeuge, bei denen zusätzlich die Hinterräder gelenkt werden können. Diese werden üblicherweise derart eingeschlagen oder verschwenkt, dass sich bei sehr geringen Fahrgeschwindigkeiten des Fahrzeugs ein möglichst geringer Radius der gefahrenen Spur einstellt, d.h. hierfür werden die Hinterräder gegensinnig zu den Vorderrädern eingeschlagen. Bei höheren Fahrgeschwindigkeiten des Fahrzeugs hingegen werden die Hinterräder im Hinblick auf den Schwimmwinkel im Fahrzeugschwerpunkt gesteuert gelenkt, mit dem Ziel, diesen Schwimmwinkel zu minimieren. Bei höheren Fahrgeschwindigkeiten des Fahrzeugs erfolgen vom Fahrer vorgegebene Ausweichmanöver oder dgl. oftmals an der Stabilitätsgrenze des Fahrzeugs. Eine Steuerung oder Regelung des Schwimmwinkels durch Lenken der Hinterräder (= Räder der Hinterachse) zusätzlich zu den Vorderrädern (= Räder der Vorderachse) verbessert zwar die Stabilität des Fahrzeuges, führt aber nicht zu einer gesteigerten Ausweichfähigkeit.

Hier eine Verbesserung für ein Verfahren nach dem Oberbegriff des Anspruchs 1 aufzuzeigen, ist Aufgabe der vorliegenden Erfindung.

Die Lösung dieser Aufgabe ist dadurch gekennzeichnet, dass zumindest bei ausreichend stabilem Fahrzustand des Fahrzeugs eine Lenkvorgabe des Fahrers von einer elektronischen Steuereinheit derart auf die Lenk-Aktuatoren der Vorderachse und der Hinterachse aufgeteilt wird, dass sich im wesentlichen eine der Soll-Trajektorie des Fahrzeugs entsprechende Gierrate des Fahrzeugs einstellt und dass ein hiervon abweichender Anteil der Lenkvorgabe des Fahrers als Wunsch nach Querversatz interpretiert und folglich im wesentlichen in einem Schwimmwinkel des Fahrzeugs umgesetzt wird.

Zunächst sei darauf eingegangen, dass eine Soll-Trajektorie (d.h. die Soll-Bewegungsrichtung oder Soll-Bewegungsbahn unter Berücksichtigung der vom Fahrer vorgegebenen Fahr-Geschwindigkeit) des Fahrzeugs betrachtet werden kann und somit bekannt ist. Beispielsweise kann eine solche Soll-Trajektorie des Fahrzeugs aus dem grundsätzlich ermittelbaren oder bekannten Verlauf der Fahrbahn abgeleitet werden. Dies ist beispielsweise mit satellitengestützten Navigationssystemen heute bekanntlich bereits mit ausreichender Genauigkeit in einer elektronischen Steuereinheit durchführbar. Alternativ oder zusätzlich können weitere Randbedingungen bei der Ermittlung einer Soll-Trajektorie berücksichtigt werden, wie beispielsweise ein anhand Fahrspur-Erkennungssystemen erkannter Fahrbahnverlauf.

Nun ist der Wunsch des Fahrers des Fahrzeugs durch seine Lenkradvorgabe bei einem Spurwechsel-Manöver oder einem Ausweichmanöver nicht wie sonst - nämlich beim Lenken zum Folgen des Fahrbahnverlaufs - üblich ein Gieren des Fahrzeuges, sondern vorzugsweise ein (reiner) Querversatz. Ein solcher Querversatz ist bekanntlich durch gleichsinniges "Mitlenken" lenkbarer Hinterräder umsetzbar.

Dies zumindest in ausreichend stabilen Fahrzuständen durchzuführen ist Vorschlag und Inhalt der vorliegenden Anmeldung. Es kann somit in Kenntnis der beispielsweise aus dem Verlauf der Fahrbahn unter Berücksichtigung der vom Fahrer vorgegebenen Fahrgeschwindigkeit ableitbaren Soll-Trajektorie des Fahrzeugs unterschieden werden, ob der Fahrer durch seine Lenkradvorgabe lediglich eine Gierbewegung des Fahrzeuges entsprechend dem Fahrbahnverlauf wünscht oder ob er bspw. lediglich einem Hindernis auf der geradlinig verlaufenden Fahrbahn ausweichen oder einen Spurwechsel auf einer mehrspurigen geradlinigen Fahrbahn durchführen möchte und somit einen Querversatz des Fahrzeugs wünscht. Im erstgenannten Fall werden dann die lenkbaren Räder derart eingestellt, dass sich im wesentlichen eine - anhand eines geeigneten Modells rechnerisch ermittelbare - Gierrate entsprechend der gewünschten bzw. erforderlichen Gierbewegung des Fahrzeugs einstellt. Im zweitgenannten Fall eines gewünschten Querversatzes hingegen werden die lenkbaren Räder derart eingestellt, dass sich im wesentlichen ein der Lenkvorgabe des Fahrers entsprechender Schwimmwinkel des Fahrzeugs einstellt, wobei das Fahrzeug somit im wesentlichen einen entsprechenden Querversatz ausführt. Neben diesen beiden genannten Extrem-Fällen können beide Fälle nebeneinander bzw. gleichzeitig auftreten, nämlich dass sowohl eine Gierbewegung aufgrund eines nicht geradlinigen Fahrbahn-Verlaufs als auch eine Querbewegung (bzw. ein Querversatz) zur Durchführung eines Spurwechsels oder dgl. ausgeführt werden soll. Entsprechend werden dann die lenkbaren Räder von einer elektronischen Steuereinheit über die genannten Lenk-Aktuatoren gelenkt, nämlich entsprechend einer Aufteilung in eine dem Fahrbahn-Verlauf folgende Gierbewegung und eine zusätzliche Querbewegung (= Querversatz), die durch einen von der Gierbewegung bzw. Gierrate abweichenden Anteil der Lenkvorgabe des Fahrers bestimmt ist und in einem entsprechenden Schwimmwinkel umgesetzt wird.

Es sei darauf hingewiesen, dass im kennzeichnenden Teil des Patentanspruchs 1 an zwei Stellen von "im wesentlichen" gesprochen wird, d.h. dass eine Lenkvorgabe des Fahrers von einer elektronischen Steuereinheit derart auf die Lenk-Aktuatoren der Vorderachse und der Hinterachse aufgeteilt wird, dass sich im wesentlichen eine der Soll-Trajektorie des Fahrzeugs entsprechende Gierrate des Fahrzeugs einstellt und dass ein hiervon abweichender Anteil der Lenkvorgabe des Fahrers im wesentlichen in einem Schwimmwinkel des Fahrzeugs umgesetzt wird. Diese aus den Worten "im wesentlichen" resultierende gewisse Unschärfe ist insbesondere deshalb erforderlich, weil eine "exakte" Aufteilung einer Lenkvorgabe des Fahrers auf eine einer Soll-Trajektorie folgenden Gierrate und einen darüber hinaus gehenden Schwimmwinkel derzeit, jedenfalls im Rahmen der Messgenauigkeit, praktisch kaum durchführbar ist. Insofern kann dieses angestrebte Ziel unter vertretbarem Aufwand nur "im wesentlichen" erreicht werden, was folglich hiermit beansprucht wird. Was jedoch die Ansteuerung der jeweiligen Lenk-Aktuatoren betrifft, die von einer elektronischen Steuereinheit vorgenommen wird, so werden diese vorzugsweise unter dieser Prämisse einer "exakten" Aufteilung angesteuert, d.h. die elektronische Steuereinheit ermittelt die Ansteuerung der Lenk-Aktuatoren vorzugsweise im Hinblick auf eine besagte "exakte" Aufteilung in eine der Soll-Trajektorie folgende Gierrate und einen ggf. darüber hinausgehenden Schwimmwinkel zur Durchführung eines Querversatzes.

Grundsätzlich führt die sich mit einer Durchführung des hier vorgeschlagenen Verfahrens quasi-optimale Aufteilung der Fahrzeugquerdynamik in eine Gierrate und einen Schwimmwinkel entsprechend einer Lenkvorgabe des Fahrers unter Berücksichtigung der Soll-Trajektorie des Fahrzeugs zu einer komfortableren und sichereren Fahrzeugbewegung. Da für einen gewünschten alleinigen Querversatz des Fahrzeuges kein Aufbau und kein Abbau einer Gierrate notwendig ist und für eine gewünschte Gierbewegung des Fahrzeuges kein Aufbau und kein Abbau eines Schwimmwinkels notwendig ist, empfindet der Fahrer das Verhalten des Fahrzeugs bei geringer geforderter Dynamik, nämlich mit einer umgesetzten Gierrate, komfortabler, während bei hoher geforderter Dynamik, nämlich bei einem Querversatz bspw. (bzw. insbesondere) in Verbindung mit einem Ausweichmanöver, aufgrund einer schnelleren Reaktion die Sicherheit gesteigert wird. Bekanntlich wird eine Gierbewegung von den Fahrzeug-Insassen als angenehmer empfunden als ein Querversatz, wie er in Form der sog. Hundegang-Lenkung erzielt werden kann. Im Falle eines Ausweichmanövers oder eines Spurwechsels oder dgl. wird mit Anwendung des erfindungsgemäßen Verfahrens eine Fahrervorgabe anstelle einer Gierbewegung im wesentlichen direkt in eine Querbewegung des Fahrzeugs umgesetzt. Der Aufbau der notwendigen Querbeschleunigung kann so schneller erfolgen; ebenso kann die Querbescheunigung auch schneller wieder abgebaut werden. Dadurch wird die Ausweichfähigkeit des Fahrzeuges ohne ein die Fahr-Stabilität des Fahrzeugs reduzierendes Gieren gesteigert.

Besonders vorteilhaft ist es, wenn ein erforderliches Ausweichmanöver oder ein Spurwechselmanöver selbsttätig erkannt wird, da ein solches dann nicht nur aus einem Vergleich der Lenkvorgabe des Fahrers mit der betrachteten Soll-Trajektorie des Fahrzeugs abgeleitet werden muss, sondern anhand eines weiteren Kriteriums schneller und/oder sicherer festgestellt werden kann. Eine die Lenk-Aktuatoren ansteuernde elektronische Steuereinheit kann demnach anhand weiterer Kriterien - alternativ zur oder neben der Soll-Trajektorie des Fahrzeugs - feststellen, ob der Fahrer eine Gierbewegung oder einen Querversatz wünscht. Wird ein Wunsch nach Querversatz erkannt, so wird erfindungsgemäß die Lenkvorgabe des Fahrers durch entsprechende Ansteuerung der Lenk-Aktuatoren im wesentlichen in einen Querversatz und nicht in eine Gierbewegung umgesetzt. Insbesondere durch geeignetes Zusammenführen und Auswerten mehrerer Eingangs-Größen oder Informationen, insbesondere von diversen Sensoren, kann eine solche Erkennung eines Querversatz-Wunsches realisiert werden. Alternativ zu oder neben der genannten Soll-Trajektorie aufgrund eines erkannten oder ermittelten Fahrbahn-Verlaufs können hierfür Informationen von einer Umfeldsensorik des Fahrzeugs, wie bspw. von einer Kamera oder von einem die Abstände zu anderen bewegten oder ruhenden Objekten im Fahrbahn-Bereich ermittelnden Radarsystem genutzt werden, ferner Informationen über die genaue statische und dynamische Lenkradvorgabe des Fahrers.

Eine aufgrund der Durchführung des erfindungsgemäßen Verfahrens gesteigerte Ausweichfähigkeit des Fahrzeuges kann Unfälle insbesondere bei hohen Fahrgeschwindigkeiten vermeiden. Des Weiteren können Spurwechselmanöver bei hohen Geschwindigkeiten komfortabler und ohne ein die Fahr-Stabilität des Fahrzeugs reduzierendes Gieren durchgeführt werden, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Verfahren zur Ansteuerung von der Vorderachse und der Hinterachse eines zweiachsigen zweispurigen nicht spurgebundenen Fahrzeugs zugeordneten Lenk-Aktuatoren, die die lenkbaren Räder der jeweiligen Achse lenken, d.h. um deren Lenkachse verschwenken, wobei eine Soll-Trajektorie des Fahrzeugs berücksichtigt wird,
**dadurch gekennzeichnet, dass** zumindest bei ausreichend stabilem Fahrzustand des Fahrzeugs eine Lenkvorgabe des Fahrers von einer elektronischen Steuereinheit derart auf die Lenk-Aktuatoren der Vorderachse und der Hinterachse aufgeteilt wird, dass sich im wesentlichen eine der Soll-Trajektorie des Fahrzeugs entsprechende Gierrate einstellt und dass ein hiervon abweichender Anteil der Lenkvorgabe des Fahrers als Wunsch nach Querversatz interpretiert und folglich im wesentlichen in einem Schwimmwinkel des Fahrzeugs umgesetzt wird.

2. Verfahren nach Anspruch 1,
**dadurch gekennzeichnet, dass** die Soll-Trajektorie des Fahrzeugs aus dem ermittelbaren Verlauf der Fahrbahn abgeleitet wird.

3. Verfahren nach Anspruch 1 oder 2,
**dadurch gekennzeichnet, dass** ein von der Soll-Trajektorie abweichendes Lenkmanöver des Fahrers, wie bspw. ein Ausweichmanöver oder ein Spurwechsel-Manöver, mittels geeigneter Sensorik erkannt und in der elektronischen Steuereinheit als Wunsch des Fahrers nach Querversatz des Fahrzeugs interpretiert wird, der im wesentlichen durch Einstellung eines entsprechenden Schwimmwinkels des Fahrzeugs umgesetzt wird.
